# EUROPÄISCHE PATENTANMELDUNG

(11) **EP 4 787 317 A1**
(43) Veröffentlichungstag der Anmeldung: **05.08.2026**
(21) Anmeldenummer: 25222758.2
(22) Anmeldetag: 11.12.2025
(51) Int. Cl.: G06T 11/00, G06V 10/25, G06V 40/16, G06V 10/764, G06V 10/774, G06V 20/59, G06V 20/56, G06V 10/82

(54) **VERFAHREN ZUM TRAINIEREN EINES TIEFEN NEURONALEN NETZWERKS, TIEFES NEURONALES NETZWERK, FAHRASSISTENZSYSTEM SOWIE KRAFTFAHRZEUG**

(30) Priorität: 31.01.2025 DE 102025000393
(71) Anmelder: Stellantis Auto SAS, 78300 Poissy (FR); FCA US LLC, Auburn Hills, MI 48326-2766 (US)
(72) Erfinder: FEIFEL, PATRICK, 65428 RÜSSELSHEIM AM MAIN (DE); BONARENS, FRANK, 65428 RÜSSELSHEIM AM MAIN (DE)
(74) Vertreter: ESIP

(57) **Zusammenfassung**

Beschrieben wird ein Verfahren zum Trainieren eines tiefen neuronalen Netzwerks unter Verwendung von Bilddaten beschrieben, umfassend:
- Bereitstellen wenigstens eines Bilddatensatzes mit einer Mehrzahl von Bilddaten, wobei zumindest Teile der Bilddaten ein oder mehrere Subjekte darstellen,
- Bereitstellen wenigstens eines Referenzbilddatensatzes mit Ausschlusssubjekten;
- Identifikation wenigstens eines Subjekts in den Bilddaten;
- Vergleich des wenigstens einen Subjekts mit den Ausschlusssubjekten in einem Inferenzschritt,
- sofern ein Subjekt einem Ausschlusssubjekt hinreichend ähnelt, Ersetzen des Subjekts durch eine virtuelle Repräsentation und Erzeugen eines modifizierten Bilddatensatzes, sowie
- Trainieren des tiefen neuronalen Netzwerks mit dem modifizierten Bilddatensatz.

## Beschreibung

Vorliegend werden ein Verfahren zum Trainieren eines tiefen neuronalen Netzwerks, ein tiefes neuronales Netzwerk, ein Fahrassistenzsystem sowie ein Kraftfahrzeug beschrieben.

Verfahren zum Trainieren eines tiefen neuronalen Netzwerks, tiefe neuronale Netzwerke, Fahrassistenzsysteme sowie Kraftfahrzeuge der eingangs genannten Art sind im Stand der Technik bekannt.

Das Training von Kl-Systemen mit Bilddaten, auf denen individuelle Personen erkennbar sind, birgt im Hinblick auf diverse Datenschutzbestimmungen wie die DSGVO (Datenschutz-Grundverordnung) eine Reihe von Herausforderungen. Diese betreffen insbesondere den Schutz personenbezogener Daten, da Bilder, die Personen eindeutig identifizierbar machen, als personenbezogene Daten gemäß einiger Datenschutzbestimmungen wie der DSGVO gelten.

Eine der zentralen Schwierigkeiten liegt in der Einhaltung des Grundsatzes der Rechtmäßigkeit, Verarbeitung nach Treu und Glauben und Transparenz. Die Datenverarbeitung darf nur auf einer rechtlichen Grundlage erfolgen, wie beispielsweise einer Einwilligung der betroffenen Personen oder einem berechtigten Interesse des Datenverarbeiters. Insbesondere die Einholung der Einwilligung gestaltet sich in der Praxis komplex, da die betroffenen Personen in aller Regel nicht bekannt oder schwer erreichbar sind, z. B. bei in der Öffentlichkeit aufgenommenen Bildern.

Ein weiteres Problem betrifft den Grundsatz der Datenminimierung. Es sollten nur solche Daten erhoben und verarbeitet werden, die für den Trainingsprozess tatsächlich erforderlich sind. Dies erfordert eine sorgfältige Auswahl der Bilddaten und eine gegebenenfalls aufwändige Vorverarbeitung.

Darüber hinaus fordert der Grundsatz der Zweckbindung, dass personenbezogene Daten nur für klar definierte, rechtmäßige Zwecke verwendet werden dürfen. Dies steht häufig in Konflikt mit der oft iterativen und explorativen Natur des Trainings von KI-Modellen, bei der Daten für potenziell unterschiedliche Zwecke analysiert werden könnten.

Die Speicherung und Verarbeitung von Bilddaten erfordert auch geeignete Maßnahmen zur Sicherheit der Verarbeitung, insbesondere um unbefugten Zugriff, Datenverluste oder Missbrauch zu verhindern. Hierfür müssen Verfahren wie Verschlüsselung und Zugriffsbeschränkungen implementiert werden, was mit technischem Aufwand verbunden ist.

Zuletzt muss das Recht der betroffenen Personen auf Auskunft, Löschung und Einschränkung der Verarbeitung berücksichtigt werden. Dies kann in der Praxis schwierig umzusetzen sein, insbesondere wenn die Bilddaten bereits in großen, verteilten Trainingsdatensätzen integriert sind.

Aus der EP 3 690 761 A1 ist ein Verfahren zur Bereitstellung eines dynamischen, adaptiven Deep-Learning-Modells bekannt, das sich von einem festen Deep-Learning-Modell unterscheidet, um dadurch mindestens ein spezifisches autonomes Fahrzeug zu unterstützen, ein geeignetes autonomes Fahren entsprechend den umgebenden Umständen durchzuführen, umfassend die Schritte: (a) ein Verwaltungsgerät, das mit autonomen Fahrzeugen zusammenarbeitet und, falls Videodaten, die von dem spezifischen autonomen Fahrzeug unter den autonomen Fahrzeugen übertragen wurden, durch ein Videospeichersystem erfasst werden, ein Feinanpassungssystem anweist, ein spezifisches Deep-Learning-Modell zur Aktualisierung unter Verwendung der Videodaten aus einer Modellbibliothek, die ein oder mehrere Deep-Learning-Modelle speichert, zu beziehen; (b) das Verwaltungsgerät gibt die Videodaten und die entsprechenden beschrifteten Daten als Trainingsdaten an das Feinanpassungssystem ein, um dadurch das spezifische Deep-Learning-Modell zu aktualisieren; und (c) das Verwaltungsgerät weist ein automatisches Aktualisierungssystem an, das aktualisierte spezifische Deep-Learning-Modell an das spezifische autonome Fahrzeug zu übertragen, um dadurch das spezifische autonome Fahrzeug zu unterstützen, das autonome Fahren unter Verwendung des aktualisierten spezifischen Deep-Learning-Modells anstelle eines bisherigen Deep-Learning-Modells durchzuführen.

Somit stellt sich die Aufgabe, Verfahren zum Trainieren eines tiefen neuronalen Netzwerks, tiefe neuronale Netzwerke, Fahrassistenzsysteme sowie Kraftfahrzeuge der eingangs genannten Art dahingehend weiterzubilden, dass ein datenschutzrechtskonformes Training eines neuronalen Netzwerks möglich ist.

Die Aufgabe wird gelöst durch ein Verfahren zum Trainieren eines tiefen neuronalen Netzwerks gemäß Anspruch 1, ein tiefes neuronales Netzwerk gemäß dem nebengeordneten Anspruch 10, ein Fahrassistenzsystem gemäß dem nebengeordneten Anspruch 11 sowie ein Kraftfahrzeug gemäß dem nebengeordneten Anspruch 12. Weiterführende Ausgestaltungen und Weiterbildungen sind Gegenstand der abhängigen Ansprüche.

Nachfolgend wird ein Verfahren zum Trainieren eines tiefen neuronalen Netzwerks unter Verwendung von Bilddaten beschrieben, umfassend:
- Bereitstellen wenigstens eines Bilddatensatzes mit einer Mehrzahl von Bilddaten, wobei zumindest Teile der Bilddaten ein oder mehrere Subjekte darstellen;
- Bereitstellen wenigstens eines Referenzbilddatensatzes mit Ausschlusssubjekten;
- Identifikation wenigstens eines Subjekts in den Bilddaten in einem Inferenzschritt;
- Vergleich des wenigstens einen Subjekts mit den Ausschlusssubjekten;
- sofern ein Subjekt einem Ausschlusssubjekt hinreichend ähnelt, Ersetzen des Subjekts durch eine virtuelle Repräsentation und Erzeugen eines modifizierten Bilddatensatzes, sowie
- Trainieren des tiefen neuronalen Netzwerks mit dem modifizierten Bilddatensatz.

Bilddaten in diesem Sinne können sowohl Standbilddaten, wie einzelne Fotos oder Schnappschüsse, als auch Videobilddaten sein, die in der Regel aus einer Abfolge von Einzelbildern bestehen und Bewegungen sowie zeitliche Abläufe darstellen. Während Standbilder oft in statischen Szenarien, etwa zur Analyse von Einzelaufnahmen oder zur Bilderkennung, verwendet werden, spielen Videobilddaten in der automotiven Praxis meist eine bedeutendere Rolle, da viele Anwendungen, wie autonome Fahrzeugsysteme auf der Analyse von Bewegungsabläufen und zeitlichen Veränderungen basieren. Videobilddaten ermöglichen es, dynamische Szenen zu verstehen und kontextbezogene Entscheidungen zu treffen.

Die Umsetzung eines Löschungsantrags von personenbezogenen Daten, z.B. gemäß der DSGVO, in Bezug auf aufgezeichnete Videobilddaten stellt eine erhebliche praktische Herausforderung dar. Der Grund liegt vor allem in der Schwierigkeit, die betroffenen Personen in den aufgezeichneten Videobilddaten zuverlässig und zügig zu identifizieren. Videostreams bestehen oft aus einer sehr großen Vielzahl von Einzelbildern, die über lange Zeiträume hinweg aufgenommen wurden, was zu enormen Datenmengen führt.

Die Identifikation einer spezifischen Person innerhalb dieser Datenmengen ist nach dem Stand der Technik äußerst zeitaufwendig, da bei bekannten Verfahren jeder Videostream systematisch durchsucht werden muss, um Sequenzen zu finden, in denen die betreffende Person zu sehen ist.

Zudem sind viele Videoaufnahmen nicht auf eine klare und standardisierte Weise indiziert, was bedeutet, dass häufig noch zusätzliche manuelle Überprüfungen erforderlich sind, um sicherzustellen, dass tatsächlich alle relevanten Abschnitte gefunden werden. Hinzu kommt, dass die tatsächliche Löschung oder Verpixelung der betroffenen Bilddaten so durchgeführt werden muss, dass die restlichen Videodaten intakt bleiben, was technisch anspruchsvoll und fehleranfällig sein kann.

Diese Schwierigkeiten werden durch die Tatsache verstärkt, dass Bilddatensätze oft in redundanten Systemen oder Backups gespeichert sind, was eine vollständige Entfernung der Daten zusätzlich erschwert.

Das Verfahren ermöglicht eine erhebliche Vereinfachung der Umsetzung des Ausschlusses von personenbezogenen Daten widersprechender oder auszuschließender Individuen, da durch die Verwendung des Inferenschrittes eine Bearbeitung während des Lernens stattfinden kann. Während des Inferenzschritts wird das bereits zum Teil trainierte neuronale Netzwerk verwendet, um Personen in den Bilddaten zu erkennen. Im Gegensatz zum Training, bei dem das neuronale Netzwerk seine Parameter durch iterative Anpassung optimiert, bleibt das neuronale Netzwerk während der Inferenz unverändert.

Im Wesentlichen besteht der Inferenzschritt darin, die Bilddaten durch die Schichten des neuronalen Netzes zu propagieren. Dabei werden die gelernten Gewichtungen und die Aktivierungsfunktionen auf die Bilddaten angewendet, um ein Ergebnis zu berechnen, nämlich vorliegend Personen zu identifizieren. Dies bedeutet, dass die Bilddaten schrittweise von einer Eingabeschicht über versteckte Schichten bis zu einer Ausgabeschicht weitergeleitet werden.

Ein Vorteil des Inferenzschritts ist seine Effizienz. Da keine Rückpropagation oder Anpassung der Parameter während des Inferenzschrittes erforderlich ist, erfolgt die Verarbeitung der Daten in der Regel sehr schnell.

Durch das hier beschriebene Verfahren kann der Vorgang des Ausschlusses personenbezogener Daten weitgehend automatisiert werden, da auf der Basis des Referenzbilddatensatzes eine automatisierte Erkennung von auszuschließenden Subjekten ermöglicht wird, die einer Datenverarbeitung widersprochen haben. Das Verfahren verhindert zuverlässig, dass das tiefe neuronale Netz mit solchen personenbezogenen Daten trainiert wird, die auszuschließen sind.

Das Training kann auf der Basis des modifizierten Bilddatensatzes mit geringem Genauigkeitsverlust fortgesetzt werden.

Dabei kann in einer ersten weiterführenden Ausgestaltung vorgesehen sein, dass der Referenzbilddatensatz in einem für Menschen unverständlichen Format vorliegt.

Zur Augmentierung von Bilddaten, sodass sie von Menschen nicht mehr interpretierbar sind, aber dennoch zum Training von KI-Systemen verwendet werden können, können spezifische Verfahren angewendet werden, die die semantischen Inhalte der Bilder für maschinelle Lernalgorithmen erhalten, während ihre visuelle Erkennbarkeit für Menschen reduziert wird. Solche Verfahren sind besonders relevant, um Datenschutz- und Sicherheitsanforderungen zu erfüllen, beispielsweise im Hinblick auf die DSGVO.

Ein möglicher Ansatz ist die Transformation der Bilddaten in den Frequenzraum, beispielsweise durch Anwendung der Fourier-Transformation. In diesem Raum können gezielte Modifikationen durchgeführt werden, die für das menschliche Auge eine Unkenntlichmachung bewirken, während die wesentlichen Merkmale, die für maschinelles Lernen relevant sind, erhalten bleiben. Nach der Transformation können die Bilder wieder in den Pixelraum zurückgeführt werden, allerdings mit veränderten visuellen Eigenschaften.

Eine weitere Methode ist die partielle oder vollständige Verschlüsselung der Bilddaten. Hierbei werden die Pixelwerte mittels kryptografischer Techniken verändert, wodurch das Bild für Menschen unlesbar wird. Gleichzeitig werden jedoch Algorithmen verwendet, die direkt mit diesen verschlüsselten Daten trainieren können, ohne dass eine Entschlüsselung notwendig ist.

Darüber hinaus kann eine stilistische Verzerrung vorgenommen werden, bei der die Bilder so verändert werden, dass ihre ursprünglichen Inhalte nicht mehr für Menschen erkannt sind, z. B. durch starke Farbänderungen, geometrische Verzerrungen oder das Überlagern von Rauschen. Solche augmentierten Bilder enthalten jedoch weiterhin die grundlegenden Strukturen, die für KI-Systeme zur Mustererkennung erforderlich sind.

In einer weiteren weiterführenden Ausgestaltung kann vorgesehen sein, dass das tiefe neuronale Netzwerk mit wenigstens einem synthetischen Bilddatensatz vortrainiert wird.

Dabei kann das Training so lange durchgeführt werden, bis gewisse Qualitätskriterien bzw. Schwellwerte erreicht werden, was die Zuverlässigkeit der Personenerkennung im Inferenzschritt steigert.

In einer weiteren weiterführenden Ausgestaltung kann vorgesehen sein, dass aus dem wenigstens einen Bilddatensatz latente Repräsentationen extrahiert werden.

Die Generierung latenter Repräsentationen aus Bilddaten dient dazu, die komplexen und hochdimensionalen Rohdaten in eine kompaktere, abstrakte Form zu transformieren, die die wesentlichen Merkmale der Daten kodiert. Hierbei werden die Bilddaten durch ein neuronales Netzwerk, beispielsweise ein Convolutional Neuronal Network (CNN), verarbeitet, das die relevanten Informationen in mehreren Schichten extrahiert. Während die ersten Schichten des Netzwerks meist niedrigstufige Merkmale wie Kanten, Texturen oder Farbverläufe identifizieren, kombinieren die tieferen Schichten diese Informationen zu höherdimensionalen und semantisch bedeutungsvollen Darstellungen, die beispielsweise Objekte oder Szenenkontexte abbilden.

Die latente Repräsentation entsteht schließlich in einer der letzten Schichten des Netzwerks, in der die Informationen auf einen in der Regel kompakten Vektor verdichtet werden. Dieser Vektor hat eine deutlich geringere Dimension als die ursprünglichen Bilddaten, wodurch Speicherbedarf und Rechenaufwand reduziert werden. Die Transformation in den latenten Raum wird während des Trainings so optimiert, dass die resultierende Repräsentation alle für die jeweilige Aufgabe relevanten Informationen enthält und irrelevante Details verworfen werden.

Latente Repräsentationen bieten zahlreiche Vorteile für das maschinelle Lernen. Durch die Reduktion der Datenmenge wird nicht nur die Rechenkomplexität verringert, sondern auch der Speicherbedarf minimiert, was die Effizienz des Systems erheblich steigert. Gleichzeitig sind latente Repräsentationen robuster gegenüber Störungen oder geringfügigen Veränderungen in den Eingabedaten, wie Rauschen oder leichten Bildtransformationen, wodurch sie die Generalisierungsfähigkeit der Modelle verbessern.

Ein weiterer Vorteil ist ihre Wiederverwendbarkeit. Die in den latenten Repräsentationen gespeicherten Merkmale sind oft generalisiert und können daher in anderen Aufgaben oder Anwendungsbereichen genutzt werden.

In einer weiteren weiterführenden Ausgestaltung kann vorgesehen sein, dass aus dem wenigstens einen Referenzbilddatensatz latente Repräsentationen extrahiert werden.

In einer weiteren weiterführenden Ausgestaltung kann vorgesehen sein, dass die latenten Repräsentationen des wenigstens einen Bilddatensatzes und die latenten Repräsentationen des wenigstens einen Referenzbilddatensatzes miteinander verglichen werden.

Durch Extraktion von hochdimensionalen latenten Repräsentationen der Rohbilddaten des Referenzbilddatensatzes, die wesentlichen Eigenschaften der Bilder abbilden, wird einerseits erreicht, dass Menschen keine Rückschlüsse mehr auf die originalen Inhalte ziehen können. Diese latenten Repräsentationen können direkt für das Verfahren genutzt werden, wodurch die Notwendigkeit entfällt, mit den ursprünglichen Bilddaten zu arbeiten.

Wenn zudem andererseits aus dem Bilddatensatz latente Repräsentationen extrahiert werden, wird die Identifikation von zu entfernenden Subjekten aus den Bilddaten erleichtert, da lediglich die jeweils erheblich niedrigdimensionaleren latenten Repräsentationen miteinander verglichen werden müssen.

Dabei kann bei hinreichender Ähnlichkeit, also Nähe der Vektoren zueinander, ein zu entfernendes Subjekt entfernt werden.

In einer weiteren weiterführenden Ausgestaltung kann vorgesehen sein, dass die Repräsentationen sparse sind.

Sparse Repräsentationen von Bilddaten bieten eine Reihe von Vorteilen im maschinellen Lernen, da sie die Daten effizienter und oft aussagekräftiger darstellen, indem sie nur die wichtigsten Merkmale speichern. Diese Reduktion der aktiven Dimensionen führt zu einer kompakteren und leichter interpretierbaren Darstellung der Daten.

Ein zentraler Vorteil sparsity-basierter Repräsentationen liegt in der verbesserten Effizienz. Durch die Reduktion der aktiven Merkmale wird der Speicherbedarf erheblich verringert, was insbesondere bei der Verarbeitung großer Bilddatensätze oder beim Einsatz in ressourcenbeschränkten Systemen wie mobilen Geräten oder eingebetteten Systemen von Bedeutung ist. Ebenso reduziert sich der Rechenaufwand bei der Verarbeitung sparsity-induzierter Daten, da weniger Werte verarbeitet werden müssen.

Ein weiterer Vorteil ist die Interpretierbarkeit der Daten. Da nur wenige Dimensionen aktiv sind, lassen sich die Repräsentationen leichter analysieren und die aktiven Merkmale können oft mit spezifischen Eigenschaften oder Inhalten des Bildes in Verbindung gebracht werden. Dies ist besonders nützlich in Bereichen, in denen die Nachvollziehbarkeit von KI-Entscheidungen wichtig ist, wie beispielsweise in der Medizin oder der autonomen Fahrzeugtechnik.

Sparse Repräsentationen tragen zudem zur Generalisation bei, da sie das Modell zwingen, sich auf die wichtigsten Merkmale der Daten zu konzentrieren und unwesentliche Informationen auszublenden. Dies kann Überanpassungen reduzieren und die Leistung des Modells auf neuen, zuvor unbekannten Daten verbessern.

In einer weiteren weiterführenden Ausgestaltung kann vorgesehen sein, dass die virtuelle Repräsentation ein Auslassbereich ist.

Dies bedeutet, dass anstelle eines Ersatzes der entsprechende Bereich vom maschinellen Lernen ausgeschlossen wird. Ein solcher Bereich kann durch eine 2D oder 3D Bounding Box definiert sein.

In einer weiteren weiterführenden Ausgestaltung kann vorgesehen sein, dass der Referenzbilddatensatz augmentiert wird.

Das Augmentieren kann beispielsweise durch Farbmanipulation, Einführung künstlicher Schatten, Änderungen von Texturen oder dergleichen geschehen.

In einer weiteren weiterführenden Ausgestaltung kann vorgesehen sein, dass wobei der Bilddatensatz und der Referenzbilddatensatz Ortsangaben enthalten, wobei eine Ersetzung eines Subjekts nur bei hinreichender Überlappung der Ortsangaben stattfindet.

Ein erster unabhängiger Gegenstand betrifft ein tiefes neuronales Netzwerk, das konfiguriert ist, Bilddaten zu verarbeiten, wobei das tiefe neuronale Netzwerk mit dem Verfahren nach einem der vorangegangenen Ansprüche trainiert ist.

Ein weiterer unabhängiger Gegenstand betrifft ein Fahrassistenzsystem mit einer Steuerung, wobei die Steuerung ein tiefes neuronales Netzwerk der zuvor beschriebenen Art aufweist.

Ein weiterer unabhängiger Gegenstand betrifft ein Kraftfahrzeug mit einem Fahrassistenzsystem der zuvor beschriebenen Art.

Ein weiterer unabhängiger Gegenstand betrifft ein Computerprogrammprodukt, mit einem dauerhaften computerlesbaren Speichermedium, auf dem Befehle eingebettet sind, die, wenn sie von wenigstens einer Recheneinheit ausgeführt werden, bewirken, dass die wenigstens Recheneinheit dazu eingerichtet ist, das Verfahren der vorgenannten Art auszuführen.

Das Verfahren kann auf einer oder auf mehreren Recheneinheiten verteilt ausgeführt werden, sodass bestimmte Verfahrensschritte auf der einen Recheneinheit und andere Verfahrensschritte auf wenigstens einer weiteren Recheneinheit ausgeführt werden, wobei berechnete Daten sofern notwendig zwischen den Recheneinheiten übermittelt werden können.

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand, gegebenenfalls auch unabhängig von den Ansprüchen, und können insbesondere zusätzlich auch Gegenstand einer oder mehrerer separater Anmeldung/en sein. Gleiche, ähnliche und/oder funktionsgleiche Teile sind mit gleichen Bezugszeichen versehen. Dabei zeigen schematisch:
- Fig. 1: ein Kraftfahrzeug mit einem Fahrassistenzsystem, sowie
- Fig. 2: ein Ablaufdiagramm des Verfahrens.

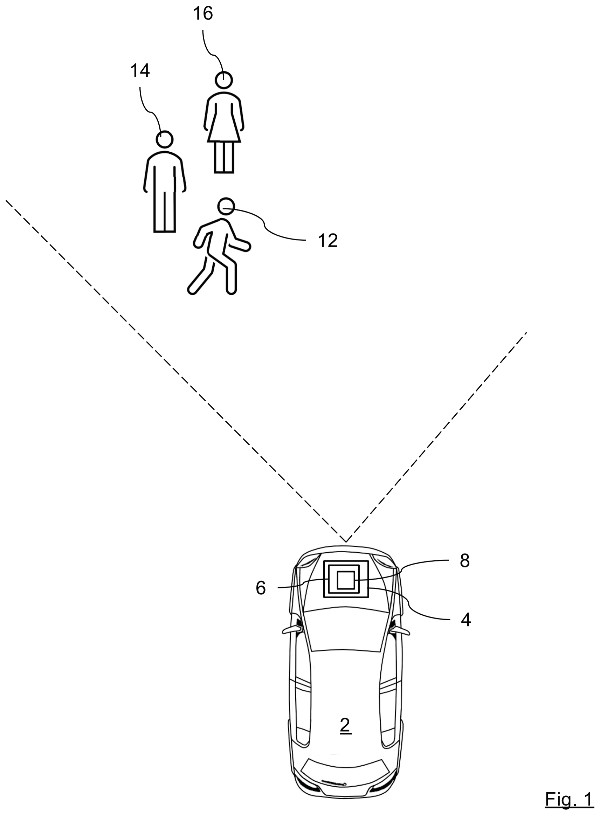

Fig. 1 zeigt ein Kraftfahrzeug 2 mit einem Fahrassistenzsystem 4.

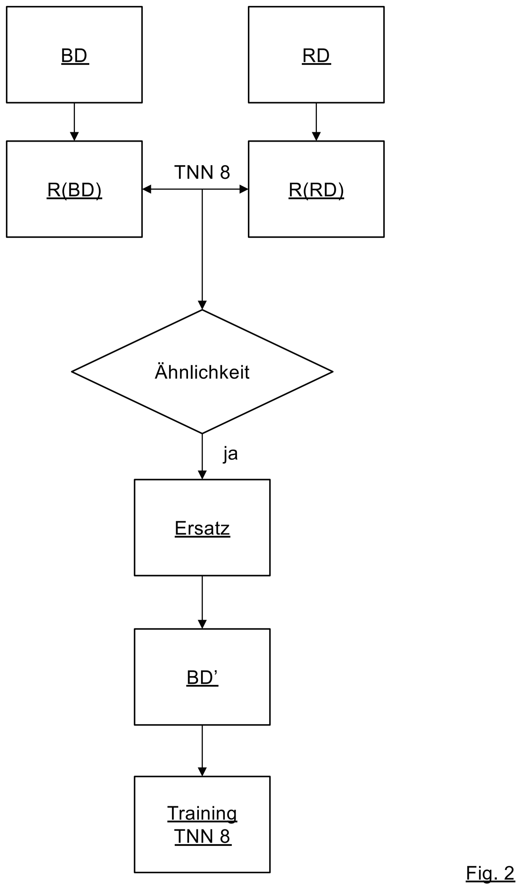

Das Fahrassistenzsystem 4 weist eine Steuerung 6 auf, das ein mit dem Maschinenlernverfahren nach Fig. 2 trainiertes neuronales Netzwerk 8 aufweist, um Personen 12, 14, 16 und deren Verhalten zu analysieren. Das neuronale Netzwerk 8 ist darauf trainiert, in Sensordaten von Sensoren des Fahrassistenzsystems 4 Personen 12, 14, 16 als solche zu identifizieren und anhand situativer Umstände, zum Beispiel der Umgebung, der Körperhaltung, der Bewegung einer Person 12, 14, 16 und dergleichen mehr deren Verhalten abzuschätzen. Daraus kann das neuronale Netzwerk 8 Daten generieren und einem Fahrplanungsmodul des Fahrassistenzsystems 4 zuleiten, das daraus Manöver ableitet.

Zum Beispiel bewegt sich die Person 12 in eine Richtung, die mit einer Fahrtrichtung des Kraftfahrzeugs 2 überlappt, weswegen das Fahrassistenzsystem 4 Maßnahmen zum Schutz der Person 12 einleiten muss, zum Beispiel Abbremsen des Kraftfahrzeugs 2 und/oder Einleiten eines Ausweichmanövers.

Fig. 2 zeigt ein Ablaufdiagramm des Verfahrens zum Trainieren des neuronalen Netzwerks 8.

Das neuronale Netzwerk 8 ist bereits auf der Basis eines synthetischen Datensatzes, der keine personenbezogenen Daten enthält, vortrainiert, um in der Lage zu sein, in Bilddaten allgemein Personen zu erkennen und betreffende latente Repräsentationen von den erkannten Personen zu erstellen.

Als Trainingsdatensatz dient vorliegend ein Bilddatensatz BD, der Videobilder von Verkehrssituationen mit Personen erhält. Aufgabe des Trainings ist es, in Bilddaten von komplexen Situationen Personen zu erkennen und das Verhalten der Personen mit hoher Präzision abzuschätzen.

Der Bilddatensatz BD enthält Aufnahmen von individuellen natürlichen Personen, die unter Umständen in dem Bilddatensatz BD identifizierbar sind. Durch die Verarbeitung der Daten sind Datenschutzrechte solcher Personen berührt, die der Verarbeitung ihrer personenbezogenen Daten widersprechen können. Um berechtigten Ansprüchen der Personen nachzukommen, ist ein Referenzbilddatensatz RD vorgesehen, in dem Daten betreffen die widersprechenden Personen abgelegt sind.

Beispielhaft sei davon ausgegangen, dass die Person 12 aus Fig. 1 der Verarbeitung von Daten, die auf sie bezogen sind, widerspricht. In diesem Fall sind Daten betreffend die Person 12 in dem Referenzbilddatensatz RD abgelegt. Diese Daten ermöglichen es, die Person 12 auch im Bilddatensatz BD zuverlässig zu erkennen.

Der Referenzbilddatensatz RD kann ein zentrales Register sein oder es kann ein dezentraler Datensatz sein. Die Daten des Referenzbilddatensatzes RD können in vielfacher Weise manipuliert sein, um die Robustheit der Erkennung betreffender widersprechender Personen zu erhöhen. Die kann erreicht werden durch Variation im Hinblick auf Bekleidung, Frisuren, teilweise Abschattungen von Gesichtern, Hinzufügen oder Entfernen von Gesichtsbehaarung und dergleichen.

Aus dem Bilddatensatz BD werden latente Repräsentationen R(BD) erzeugt. Gleichzeitig wird aus dem Referenzbilddatensatz RD latente Repräsentationen R(RD) erzeugt.

In einem Inferenzschritt wird das vortrainierte tiefe neuronale Netz 8 verwendet, um Personen in dem Bilddatensatz BD zu erkennen.

Die latenten Repräsentationen R(BD) betreffend die im Inferenzschritt identifizierten Personen und die latenten Repräsentationen R(RD) von Personen des Referenzbilddatensatzes RD werden miteinander verglichen. Gleich aussehende Personen erzeugen in den entsprechenden Vektorrepräsentationen R(BD) und R(RD) Nähen oder Identitäten, die darauf schließen lassen, dass es sich bei einer im Bilddatensatz BD aufgenommenen Person um eine Person handelt, die auch in dem Referenzbilddatensatz RD vorhanden ist.

Sollte eine hinreichende Ähnlichkeit erkannt werden, zum Beispiel Unterschreiten einer vorgegebenen Schwelle in der L2-Distanz, werden die entsprechenden personenbezogenen Daten der Person 12 durch eine virtuelle Repräsentation ersetzt werden. Die virtuelle Repräsentation kann leer sein, zum Beispiel durch Festlegen einer Ignore-Zone, z.B. in Form einer auszuschließenden Bounding Box, für jeden Frame der betreffenden Videodaten des Bilddatensatzes BD in Bereichen, in denen die Person 12 zu erkennen ist, auf die das tiefe neuronale Netzwerk 8 beim Training nicht zugreifen darf, oder durch Ersatz entsprechender Bildbereiche mit einer synthetischen oder generischen Personendarstellung. Die virtuelle Repräsentation wird dann bei der Berechnung der Verlustfunktion verwendet, die das tiefe neuronale Netz 8 beim Training versucht zu minimieren.

Der Bilddatensatz BD kann des Weiteren Ortsangaben enthalten, also Angaben darüber, wo bestimmte Bilder bzw. Videoaufnahmen des Bilddatensatzes BD erzeugt wurden. Der entsprechende Vergleich mit dem Referenzbilddatensatz RD kann ortsbezogen durchgeführt werden. Das heißt, dass ein Subjekt nur dann ausgeschlossen wird, wenn es innerhalb eines gewissen Umkreises um bestimmte Orte herum aufgenommen wurde. Der Referenzbilddatensatz RD enthält dann entsprechende Bestimmungen zu den Orten bzw. Bereichen, innerhalb derer entsprechende Personen einer Verarbeitung ihrer Daten widersprechen. Dies kann unter anderem an einen geplanten Einsatzort des tiefen neuronalen Netzwerks 8 gekoppelt sein. Wenn das tiefe neuronale Netzwerk 8 in einem Gebiet eingesetzt werden soll und mit Daten aus Gebieten trainiert wird, in denen es keine entsprechenden Datenschutzverordnungen gibt, ist eine Durchführung eines Ersatzes oder eines Ausschlusses von personenbezogenen Daten während des Trainings unter Umständen nicht erforderlich.

Aus der resultierenden Manipulation des Bilddatensatzes BD wird ein modifizierter Bilddatensatz BD' erzeugt. Der modifizierte Bilddatensatz BD' kann in manchen Ausführungsformen abgespeichert werden. Alternativ kann das Verfahren während des eigentlichen Trainings des tiefen neuronalen Netzes 8 durchgeführt werden, ohne dass der modifizierte Bilddatensatz BD' abgespeichert wird.

Obwohl der Gegenstand im Detail durch Ausführungsbeispiele näher illustriert und erläutert wurde, so ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa einer weitergehenden Erläuterung in der Beschreibung, definiert wird.

### Bezugszeichenliste

- 2: Kraftfahrzeug
- 4: Fahrassistenzsystem
- 6: Steuerung
- 8: neuronales Netzwerk
- 12, 14, 16: Person
- BD: Bilddatensatz
- BD': modifizierter Bilddatensatz
- RD: Referenzbilddatensatz
- R(): latente Repräsentation

## Patentansprüche

1. Verfahren zum Trainieren eines tiefen neuronalen Netzwerks (8) unter Verwendung von Bilddaten, umfassend:
- Bereitstellen wenigstens eines Bilddatensatzes (BD) mit einer Mehrzahl von Bilddaten, wobei zumindest Teile der Bilddaten ein oder mehrere Subjekte (12, 14, 16) darstellen;
- Bereitstellen wenigstens eines Referenzbilddatensatzes (RD) mit Ausschlusssubjekten (12);
- Identifikation wenigstens eines Subjekts (12, 14, 16) in den Bilddaten in einem Inferenzschritt;
- Vergleich des wenigstens einen Subjekts (12, 14, 16) mit den Ausschlusssubjekten (8);
- sofern ein Subjekt (12) einem Ausschlusssubjekt (12) hinreichend ähnelt, Ersetzen des Subjekts (12) durch eine virtuelle Repräsentation und Erzeugen eines modifizierten Bilddatensatzes (BD'), sowie
- Trainieren des tiefen neuronalen Netzwerks (8) mit dem modifizierten Bilddatensatz (BD).

2. Verfahren nach Anspruch 1, wobei das tiefe neuronale Netzwerk (8) mit wenigstens einem synthetischen Bilddatensatz vortrainiert wird.

3. Verfahren nach Anspruch 1 oder 2, wobei aus dem wenigstens einen Bilddatensatz (BD) latente Repräsentationen (R(BD)) extrahiert werden.

4. Verfahren nach einem der vorangegangenen Ansprüche, wobei aus dem wenigstens einen Referenzbilddatensatz (RD) latente Repräsentationen (R(RD)) extrahiert werden.

5. Verfahren nach Anspruch 3 und 4, wobei die latenten Repräsentationen (R(BD)) des wenigstens einen Bilddatensatzes (BD) und die latenten Repräsentationen (R(RD)) des wenigstens einen Referenzbilddatensatzes (RD) miteinander verglichen werden.

6. Verfahren nach einem der Ansprüche 3 bis 5, wobei die latenten Repräsentationen (R(BD), R(RD) sparse sind.

7. Verfahren nach einem der vorangegangenen Ansprüche, wobei die virtuelle Repräsentation ein Auslassbereich ist.

8. Verfahren nach einem der vorangegangenen Ansprüche, wobei der Referenzbilddatensatz (RD) augmentiert wird.

9. Verfahren nach einem der vorangegangenen Ansprüche, wobei der Bilddatensatz (BD) und der Referenzbilddatensatz (RD) Ortsangaben enthalten, wobei eine Ersetzung eines Subjekts (12) nur bei hinreichender Überlappung der Ortsangaben stattfindet.

10. Tiefes neuronales Netzwerk (8), das konfiguriert ist, Bilddaten zu verarbeiten, wobei das tiefe neuronale Netzwerk (8) mit dem Verfahren nach einem der vorangegangenen Ansprüche trainiert ist.
